# FASCICULE DE BREVET EUROPEEN

(11) **EP 3 307 659 B1**
(45) Date de publication et mention de la délivrance du brevet: **20.02.2019**
(21) Numéro de dépôt: 16735909.0
(22) Date de dépôt: 03.06.2016
(51) Int. Cl.: B65H 1/02, B65H 7/14

(54) **DISPOSITIF DE DÉPILAGE AVEC SYSTÈME DE VISION**
ENTSTAPELUNGSVORRICHTUNG MIT BETRACHTUNGSSYSTEM
UNSTACKING DEVICE HAVING A VIEWING SYSTEM

(30) Priorité: 11.06.2015 FR 1555315
(43) Date de publication de la demande: 18.04.2018
(73) Titulaire: Solystic, 92220 Bagneux (FR)
(72) Inventeur: EL BERNOUSSI, Hicham, 75015 Paris (FR); TELUOB, Jean-Marc, 07130 Cornas (FR); AMBROISE, Stéphane, 26600 Serves Sur Rhone (FR)
(74) Mandataire: Prugneau, Philippe
(86) Numéro de dépôt international: PCT/FR2016/051338
(87) Numéro de publication internationale: WO 2016/198769

(56) Documents cités:
- EP-A1- 1 902 989
- EP-A2- 2 292 539
- WO-A1-00/26861
- US-A1- 2014 271 087

## Description

### Domaine technique

L'invention concerne de façon générale le dépilage d'objets plats pour leur mise en série dans un convoyeur ou analogue et plus particulièrement le dépilage d'articles de courrier en entrée d'alimentation des machines de tri postal.

L'invention concerne plus particulièrement un dispositif de dépilage comprenant un magasin d'alimentation apte à stocker en pile sur chant des articles de courrier et une tête de dépilage apte à dépiler un à un les articles de courrier à l'avant de la pile dans le magasin, le magasin comprenant une sole sur laquelle reposent sur chant les articles de courrier et une palette de retenue qui retient l'arrière de la pile, la sole et la palette étant conçues pour déplacer la pile vers la tête de dépilage sous l'action d'une unité de contrôle/commande au fur et à mesure du dépilage des articles de courrier à l'avant de la pile.

### Technique antérieure

Les machines de tri postal actuelles sont prévues pour gérer un large spectre d'articles de courrier comme par exemple des lettres, des cartes postales, des magazines ouverts, des articles de courriers fins, souples, épais emballés ou non dans une enveloppe en papier ou dans une feuille en matière plastique.

Tous ces articles de courrier sont généralement mis en pile sur chant dans un magasin d'alimentation d'un dépileur comportant une tête de dépilage du type buse à dépression et courroie perforée.

Dans certaines situations, les articles de courrier peuvent avoir tendance à s'affaisser ou s'avachir si la pile ne reste pas assez compacte au fur et à mesure du dépilage.

Dans certains cas, si l'inclinaison des articles de courrier n'est pas homogène sur le magasin, le redressement des articles présents devant la tête de dépilage provoque le basculement du reste de la pile en avant ce qui peut ainsi entraîner un bourrage dans le dépileur.

Les articles de courrier à l'avant de la pile peuvent aussi avoir tendance à glisser du pied vers l'avant ou vers l'arrière de la pile ce qui fait qu'ils ne sont pas correctement plaqués contre la tête de dépilage, empêchant ainsi leur dépilage et entraînant parfois un bourrage dans le dépileur.

Ainsi, la présence d'un Opérateur peut être nécessaire pour contrôler le dépilage des articles de courrier et pour intervenir en cas notamment de basculement vers l'avant ou vers l'arrière de certains articles de courrier dans la pile.

Mais ces interventions ralentissent la cadence de dépilage et augmentent le coût d'exploitation d'une machine de tri postal.

Il existe également des dispositifs aptes à détecter un affaissement ou avachissement d'articles de courrier d'une pile et à redresser ces articles de courrier, tels que divulgués dans les documents EP 2 292 539 et US 2014/271087.

### Exposé de l'invention

Le but de l'invention est donc de remédier à ces inconvénients en proposant un dispositif de dépilage amélioré.

L'idée à la base de l'invention est d'utiliser un système de vision pour observer la pile d'articles de courrier de profil dans le magasin du dépileur et par cette observation d'anticiper une action de redressement des articles de courrier dans la pile pour éviter des situations d'avachissement complet des articles de courrier ou encore de basculement complet vers l'avant ou vers l'arrière.
A cet effet, l'invention a pour objet un dispositif de dépilage selon la revendication 1.

Ainsi, on comprend que l'unité de contrôle/commande pourra agir sur le déplacement de la palette et de la sole pour corriger l'inclinaison des articles de courrier dans la pile avant même que ces articles de courrier n'atteignent la tête de dépilage.

Selon l'invention, au lieu de redresser uniquement l'article de courrier courant venant en contact avec la tête de dépilage, on agit par anticipation sur l'ensemble de la pile d'articles de courrier pour diminuer le risque de basculement de l'article de courrier à l'avant de la pile.

Le dispositif de dépilage selon l'invention peut avantageusement présenter les particularités suivantes :
- la palette présente une certaine inclinaison angulaire et l'unité de contrôle/commande commande le déplacement de la sole et de la palette pour placer l'article de courrier en tête de pile dans une position angulaire d'inclinaison sensiblement identique à celle de la palette ;
- la sole comporte une chute ou un renfoncement à l'avant de la tête de dépilage ;
- l'unité de contrôle/commande est apte à appliquer une commande appropriée de la palette et de la sole pour corriger une position critique de la pile qui correspond à un cas significatif d'images de scène acquises en exploitation réelle avec un algorithme d'apprentissage.

### Description sommaire des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :
- la figure 1 est une représentation schématique d'une vue de dessus du dispositif de dépilage d'articles de courrier selon l'invention ;
- la figure 2 est une représentation schématique d'une vue de profil du dispositif de dépilage dans un premier scénario de basculement d'articles de courrier selon l'invention ;
- la figure 3 est une représentation schématique d'une vue de profil du dispositif de dépilage dans un second scénario de basculement d'articles de courrier selon l'invention ;
- la figure 4 est une représentation schématique d'une vue de profil du dispositif de dépilage dans un troisième scénario de basculement d'articles de courrier selon l'invention.

### Description des modes de réalisation

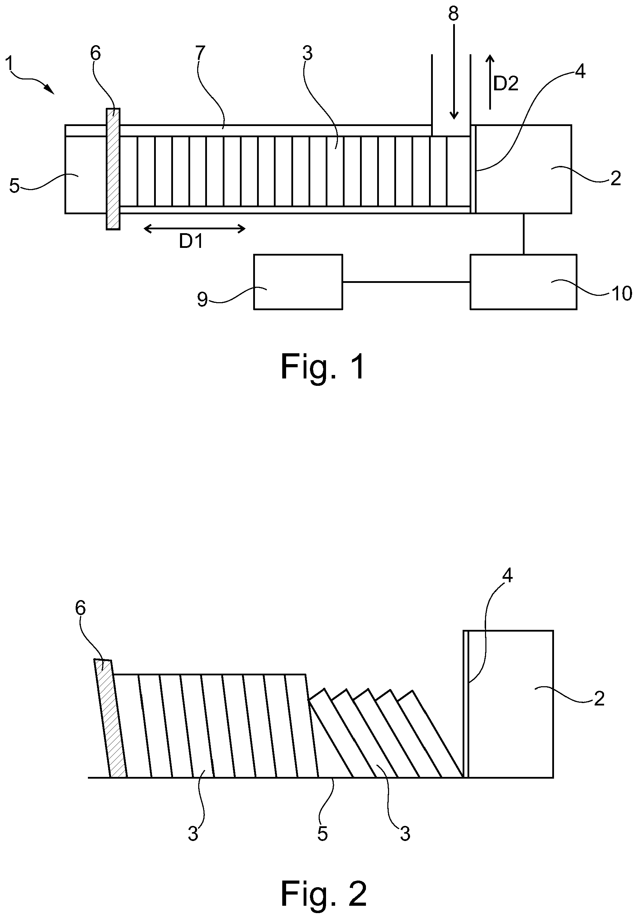

En référence à la figure 1, le dispositif de dépilage 1 selon l'invention comporte un dépileur ou tête de dépilage 2 conçu pour dépiler des articles de courrier 3 afin de les mettre en série.

Le dépileur 2 présente une plaque de dépilage 4 fixe contre laquelle l'article de courrier 3 en tête de pile repose face contre face pour être dépilé.

Les articles de courrier 3 sont dépilés un par un de manière connue de l'Homme du métier.

Le dispositif de dépilage 1 comprend également un magasin d'alimentation dans lequel une pile d'articles de courrier est stockée.

Ce magasin d'alimentation comporte des moyens mobiles aptes à déplacer la pile vers la tête de dépilage.

Ces moyens comprennent notamment un convoyeur 5 formant une sole, par exemple un tapis de convoyage ou une courroie, sur laquelle reposent les articles de courrier 3 sur chant, et aussi une palette de retenue 6 sur laquelle prend appui l'arrière de la pile.

Le convoyeur 5 est ici mobile en translation selon la flèche D1, par rapport à l'entrée du dépileur pour présenter un à un les articles de courrier devant la plaque fixe du dépileur.

La palette est également mobile en translation suivant la flèche D1.

Comme l'indique la flèche D1, la sole 5 et la palette 6 peuvent être commandées pour avancer ou reculer par rapport à la tête de dépilage 2.

Une rive de taquage 7 fixe s'étendant le long du convoyeur 5 peut être prévue pour former un appui latéral aux articles de courrier 3 de la pile.

Comme visible sur la figure 1, chaque article de courrier à l'avant de la pile est séparé du reste de la pile par cisaillement suivant une direction D2 perpendiculaire à D1.

On a représenté sur la figure 1 une fente d'extraction 8 qui s'étend suivant cette direction D2 entre la rive de taquage 7 et la plaque de dépilage 4 et par laquelle est éjecté l'article de courrier qui est dépilé.

Comme visible sur la figure 2, la palette 6 est inclinée par rapport à la verticale (vers l'arrière suivant la direction de déplacement vers la tête de dépilage). L'angle d'inclinaison peut être de l'ordre de 10° par rapport à la verticale.

Selon l'invention, le dispositif de dépilage 2 comprend un système de vision ou caméra 9 placé sur un côté du magasin de manière à former une image numérique de la pile d'articles de courrier de profil.

Dans le cas d'exemple, la caméra 9 est placée du côté opposé du magasin à celui où se trouve la rive de taquage 7.

La caméra 9 est reliée à l'unité de contrôle/commande 10 qui est agencée pour évaluer une certaine inclinaison des articles de courrier dans la pile à partir de ladite image de profil de la pile et à partir de cette évaluation commander le déplacement de la sole 5 et de la palette 6 pour présenter l'article de courrier à l'avant de la pile dans une position sur chant satisfaisante pour son dépilage par la tête de dépilage 2, et plus particulièrement dans la position angulaire de la palette.

Il faut comprendre qu'à chaque dépilage d'un article de courrier à l'avant de la pile, la caméra 9 forme une nouvelle image de profil de la pile et l'unité 10 évalue de nouveau l'inclinaison des articles de courrier dans la pile pour commander en temps réel le déplacement de la sole et de la palette de façon à anticiper des situations d'avachissement complet des articles de courrier ou encore de basculement complet vers l'avant ou vers l'arrière notamment de l'article de courrier à l'avant de la pile.

L'évaluation de l'inclinaison des articles de courrier dans la pile peut comprendre une segmentation de l'image de profil de la pile prise par la caméra 9 en plusieurs plus petites images ou imagettes et un traitement de chaque imagette dans lequel on détermine un angle d'inclinaison d'un article de courrier et dans lequel on compare cet angle à des seuils pour identifier que cet article de courrier est trop basculé vers l'avant ou vers l'arrière ou encore est avachi.

Par exemple, si la palette est inclinée d'un angle de 10° par rapport à la verticale, les seuils de comparaison peuvent être de l'ordre de 7° et 15°.

Des images de piles acquises en exploitation réelle a permis de constituer une base de quelques dizaines de milliers d'exemples de scènes. Un algorithme d'apprentissage a été utilisé pour ramener le nombre d'exemples à une centaine de cas significatifs pour lesquels une commande appropriée de la palette et de la sole a été déterminée pour corriger une position critique de la pile, que l'on appellera scénarios.

En conséquence, à partir des résultats de traitement des petites images, l'unité 10 est apte à identifier différentes situations anormales des articles de courrier dans la pile (par exemple l'inclinaison ou la courbure) et d'appliquer différents scénarios correspondants.

Ces scénarios peuvent aussi réagir aux dimensions, à la rigidité, à l'épaisseur, et au poids des articles de courrier 3 si ces grandeurs physiques sont disponibles dans le dépileur.

En particulier, la caméra forme ici une image numérique sur toute la hauteur des articles de courrier de la pile vue de profil comprenant le pied et le haut des articles de courrier de la pile sur une certaine longueur du magasin depuis la tête de dépilage. La caméra est par exemple positionnée à 410mm de la pile à observer avec un champ de vision de 405mm de largeur sur 210mm de hauteur de sorte à restituer dans les images les tranches des articles de courrier de la pile dans leur intégralité.

Un premier scénario, représenté sur la figure 2, concerne un basculement de pile lorsqu'une partie ou l'ensemble de la pile d'articles de courrier est inclinée vers l'arrière.

Dans ce cas, en réponse à ce scénario, l'unité de contrôle/commande 10 va piloter la palette 6 pour la déplacer vers l'avant, à savoir en direction du dépileur.

L'effet du déplacement vers l'avant de la palette 6 va redresser les articles de courrier 3 par le haut pour les disposer dans la position de dépilage.

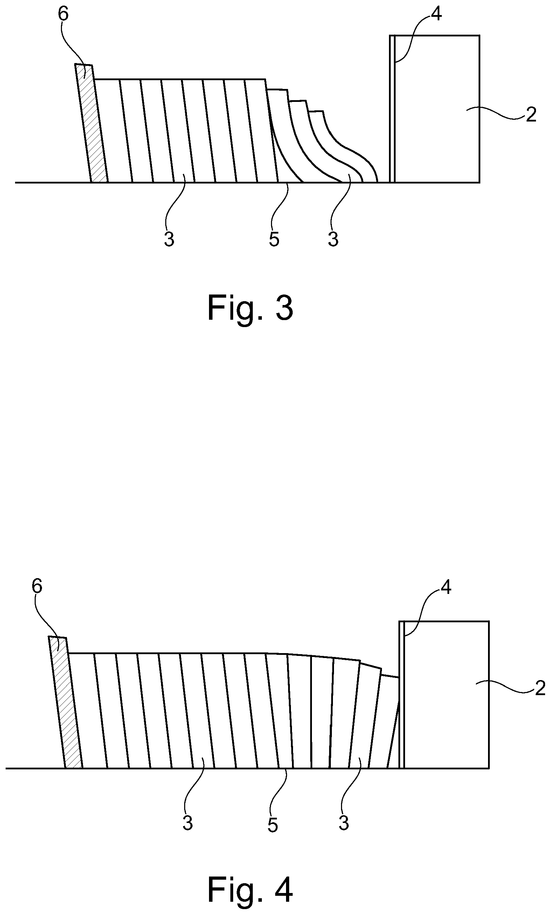

Le deuxième scénario représenté sur la figure 3 montre un avachissement ou un affaissement d'une partie de la pile d'articles de courrier.

L'avachissement est par exemple provoqué par un manque d'avance de la sole portant les articles de courrier 3 en direction de la tête de dépilage 2.

Cela arrive avec des articles de courrier 3 mous qui s'effondrent au niveau de la tête de dépilage 2 empêchant ainsi le dépilage.

Dans ce cas, l'unité de contrôle/commande 10 va piloter le convoyeur 5 et la palette 6 vers l'avant, avant que l'avachissement n'atteigne un point critique de bourrage.

Le troisième scénario représenté sur la figure 4 concerne le basculement de la pile vers l'avant. Dans ce cas, dès que la pile d'articles de courrier 3 devient plus verticale que la palette 6, l'unité de contrôle/commande 10 va piloter la palette 6 pour la reculer et/ou faire avancer le convoyeur 5 vers la tête du dépileur.

De plus, selon certains types de scénarios, il est également possible de reculer le convoyeur 5 seul, de reculer à la fois le convoyeur 5 et la palette 6 ou bien d'avancer la palette 6 en même temps que de reculer le convoyeur 5 afin de profiter d'un effet synergique des deux déplacements en sens contraire et remettre la pile d'articles de courrier dans une position satisfaisante pour le dépilage.

Sans restreindre la portée de l'invention, le dispositif de dépilage 1 peut présenter un renfoncement ou une chute, non représenté sur les dessins, entre le convoyeur 5 et la plaque fixe 4, prenant la forme d'un U.

Il est bien entendu que l'unité 10 peut être agencée pour gérer d'autres scénarios que ceux indiqués ci-dessus.

## Revendications

1. Dispositif de dépilage (1) comprenant un magasin d'alimentation apte à stocker en pile sur chant des articles de courrier en appui latéral contre une rive de taquage (7) qui s'étend sur un côté du magasin, et une tête de dépilage (2,4) apte à dépiler un à un les articles de courrier à l'avant de la pile dans le magasin, le magasin comprenant une sole mobile (5) sur laquelle reposent sur chant les articles de courrier et une palette de retenue (6) qui retient l'arrière de la pile, la sole et la palette étant conçues pour déplacer la pile vers la tête de dépilage sous l'action d'une unité de contrôle/commande (10) au fur et à mesure du dépilage des articles de courrier à l'avant de la pile, ledit dispositif de dépilage (1) comprenant en outre un système (9) apte à détecter un basculement de la pile vers l'avant ou vers l'arrière et en réponse à cette détection à commander le déplacement de la sole et de la palette de telle manière à redresser la pile dans le magasin pour placer ledit article de courrier en tête de pile dans une position angulaire d'inclinaison satisfaisante pour son dépilage par la tête de dépilage, **caractérisé en ce que** ledit système (9) est une caméra disposée du côté opposé du magasin où se trouve ladite rive de taquage (7) pour former des images numériques sur toute la hauteur des articles de courrier de la pile d'articles de courrier vue de profil comprenant le pied et le haut des articles sur une certaine longueur du magasin depuis la tête de dépilage et **en ce que** ladite unité de contrôle/commande (10) est agencée pour évaluer une certaine inclinaison des articles de courrier dans la pile à partir des images de profil de la pile et à appliquer à partir de ladite évaluation au moins un scénario qui commande un avancement ou un recul sélectif ou simultané de la sole et/ou de la palette par rapport à la tête de dépilage (2) pour redresser la pile dans le magasin.

2. Dispositif de dépilage (1) selon la revendication 1, **caractérisé en ce que** ladite palette (6) présente une certaine inclinaison angulaire et **en ce que** ladite unité de contrôle/commande (10) commande le déplacement de la sole et de la palette pour placer ledit article de courrier en tête de pile dans une position angulaire d'inclinaison sensiblement identique à celle de la palette.

3. Dispositif de dépilage (1) selon l'une des revendications précédentes, **caractérisé en ce que** la sole comporte une chute ou un renfoncement à l'avant de la tête de dépilage.

4. Dispositif de dépilage (1) selon l'une des revendications précédentes, **caractérisé en ce que** l'unité de contrôle/commande (10) est apte à appliquer une commande appropriée de la palette et de la sole pour corriger une position critique de la pile qui correspond à un cas significatif d'images de scène acquises en exploitation réelle avec un algorithme d'apprentissage.

## Patentansprüche

1. Abstapelvorrichtung (1), umfassend ein Versorgungsmagazin, das in der Lage ist, Sendungsgüter auf Kante in einem Stapel und seitlich abgestützt gegen einen sich einerseits des Magazins erstreckenden Ausrichtrand (7) zu lagern, und einen Abstapelkopf (2,4), der in der Lage ist, die Sendungsgüter am Vorderende des Stapels in dem Magazin einzeln abzustapeln, wobei das Magazin einen beweglichen Boden (5), auf dem die Sendungsgüter auf Kante ruhen, und eine Halteplatte (6), die das rückwärtige Ende des Stapels zurückhält, umfasst, wobei der Boden und die Platte ausgebildet sind zum Verlagern des Stapels zu dem Abstapelkopf unter der Einwirkung einer Regel-/Steuereinheit (10) je nach Abstapelung der Sendungsgüter am Vorderende des Stapels, wobei die Abstapelvorrichtung (1) ferner ein System (9) zum Erfassen eines Kippens des Stapels nach vorne oder nach hinten umfasst und in Reaktion auf diese Erfassung zum Steuern der Verlagerung des Bodens und der Platte derart, dass der Stapel in dem Magazin wieder aufgerichtet wird, um das Sendungsgut am Kopfende des Stapels in eine das Abstapeln von dem Abstapelkopf ermöglichende, ausreichende Neigungswinkelposition zu platzieren,
**dadurch gekennzeichnet,**
**dass** das System (9) eine Kamera ist, die auf der gegenüberliegenden Seite des Magazins, an dem sich der Ausrichtrand (7) befindet, angeordnet ist, um digitale Bilder über die gesamte Höhe der Sendungsgüter des Stapels von Sendungsgütern in einer Seitenansicht gesehen, umfassend den Fuß und das obere Ende der Güter, über eine bestimmte Länge des Magazins, ausgehend von dem Abstapelkopf, zu bilden, und
**dass** die Regel-/Steuereinheit (10) ausgebildet ist zum Auswerten einer bestimmten Neigung der Sendungsgüter in dem Stapel ausgehend von den Bildern der Seitenansicht des Stapels und zum Anwenden, ausgehend von der Auswertung, wenigstens eines Szenarios, das ein selektives oder ein simultanes Vorschieben oder Zurücksetzen des Bodens und/oder der Platte in Bezug auf den Abstapelkopf (2) steuert, um den Stapel in dem Magazin wieder aufzurichten.

2. Abstapelvorrichtung (1), nach Anspruch 1, **dadurch gekennzeichnet, dass** die Platte (6) eine bestimmte Winkelneigung aufweist, und dass die Regel-/Steuereinheit (10) die Verlagerung des Bodens und der Platte steuert, um das am Kopfende des Stapels befindliche Sendungsgut in eine Neigungswinkelposition zu verlagern, die im Wesentlichen mit derjenigen der Platte identisch ist.

3. Abstapelvorrichtung (1) nach einem der vorhergehenden Ansprüche, **dadurch gekennzeichnet, dass** der Boden ein Gefälle oder eine Vertiefung am Vorderende des Abstapelkopfes umfasst.

4. Abstapelvorrichtung (1) nach einem der vorhergehenden Ansprüche, **dadurch gekennzeichnet, dass** die Regel-/Steuereinheit (10) in der Lage ist, eine geeignete Steuerung der Platte und des Bodens zum Korrigieren einer kritischen Position des Stapels anzuwenden, die einem signifikativen Fall von aus realer Auswertung mit einem Lernalgorithmus erfassten Bildern von Szenen entspricht.

## Claims

1. An unstacker device (1) comprising a feed magazine suitable for storing mailpieces in a stack and on edge, the mailpieces bearing laterally against a jogging edge (7) that extends on one side of the magazine, and an unstacker head (2, 4) suitable for unstacking the mailpieces one-by-one from the front of the stack in the magazine, the magazine having a floor (5) on which the mailpieces stand on edge and a retaining paddle (6) that retains the back of the stack, the floor and the paddle being designed to move the stack towards the unstacker head under the action of a monitoring and control unit (10) as the mailpieces are being unstacked from the front of the stack, said unstacker device (1) further comprising a vision system (9) suitable for detecting tipping of the stack forwards or backwards, and, for responding to such detection by causing the floor and the paddle to move in such a manner as to straighten up the stack in the magazine so as to place said mailpiece at the head of the stack in a satisfactory position of angular inclination so that it can be unstacked by the unstacker head, said unstacker head being **characterized in that** said system (9) is a camera disposed on the side of the magazine that is opposite from the side on which the jogging edge (7) is situated in order to form digital images over the entire height of the mailpieces of the stack of mailpieces as seen in profile comprising the foot and the top of the mailpieces over a certain length of the magazine from the unstacker head, and **in that** said monitoring and control unit (10) is arranged to evaluate a certain inclination of the mailpieces in the stack on the basis of the profile images of the stack and to apply from said evaluation at least one scenario to cause the floor and/or the paddle selectively or simultaneously to move forwards or backwards relative to the unstacker head (2) so as to straighten up the stack in the magazine.

2. An unstacker device (1) according to claim 1, **characterized in that** said paddle (6) has a certain angular inclination, and **in that** said monitoring and control unit (10) causes the floor and the paddle to move so as to place said mailpiece at the head of the stack in a position of angular inclination that is substantially identical to the position of angular inclination of the paddle.

3. An unstacker device (1) according to any preceding claim, **characterized in that** the floor is provided with a setback or "drop" just before the unstacker head.

4. An unstacker device (1) according to any preceding claim, **characterized in that** the monitoring and control unit (10) is suitable for applying appropriate control to the paddle and to the floor so as to correct a critical position of the stack that corresponds to a significant configuration from scene images acquired under real operating conditions with a learning algorithm.
